# EUROPÄISCHE PATENTSCHRIFT

(11) **EP 3 251 181 B1**
(45) Veröffentlichungstag und Bekanntmachung des Hinweises auf die Patenterteilung: **27.11.2019**
(21) Anmeldenummer: 16713413.9
(22) Anmeldetag: 30.03.2016
(51) Int. Cl.: H01R 39/08, H01R 39/34, H02K 13/02, H02K 13/00, H02H 3/16

(54) **SCHLEIFRINGKÖRPER FÜR EINEN LÄUFER EINER ELEKTRISCH ERREGTEN ROTATORISCHEN DYNAMOELEKTRISCHEN MASCHINE**
SLIP RING BODY COMPRISING A ROTOR FOR AN ELECTRICALLY EXCITED ROTATIONAL DYNAMO-ELECTRIC MACHINE
CORPS DE BAGUE DE COLLECTEUR POUR UN ROTOR D'UNE MACHINE DYNAMOÉLECTRIQUE TOURNANTE À EXCITATION ÉLECTRIQUE

(30) Priorität: 17.04.2015 EP 15164054
(43) Veröffentlichungstag der Anmeldung: 06.12.2017
(73) Patentinhaber: Siemens Aktiengesellschaft, 80333 München (DE)
(72) Erfinder: BINDER, Herbert, 94127 Neuburg (DE); MEMMINGER, Oliver, 94127 Neuburg a. Inn (DE)
(86) Internationale Anmeldenummer: PCT/EP2016/056905
(87) Internationale Veröffentlichungsnummer: WO 2016/165939

(56) Entgegenhaltungen:
- DE-A1-102013 217 306
- GB-A- 1 266 620
- US-A- 2 322 011
- US-A- 2 551 030
- US-A- 3 636 394

## Beschreibung

Die Erfindung betrifft einen Schleifringkörper eines Läufers einer elektrisch erregten rotatorischen dynamoelektrischen Maschine, die rotatorische dynamoelektrische Maschine, als auch deren Anwendung in Generatoren von Windkraftanlagen.

Bei rotatorischen dynamoelektrischen Maschinen, insbesondere bei deren Verwendung als Windkraftgeneratoren sind unterschiedliche Konzepte bekannt. Dabei ist ein Konzept, dass man eine Wicklung des Rotors über Schleifringe elektrisch speist. Die Ströme der Läufer dieser Windkraftgeneratoren müssen von der Wicklung des Rotors abgeleitet und an den Schleifringkörper angeschlossen werden. Hierzu werden Litzen mit vergleichsweise hohen Querschnitten größer 90 mm² verwendet. Aufgrund der steigenden Durchgangsdrehzahlen der Rotoren besteht nunmehr die Gefahr, dass aufgrund der Fliehkraftbeanspruchung, hervorgerufen durch die freien Massen dieser Litzen, die Anschlussbolzen des Schleifringkörpers beschädigt bzw. in ihrer Verankerung gelockert werden. Die Folge wären hohe Schäden bzw. Ausfall des Generators und vergleichsweise hohe Reparaturkosten.

Aufgrund der hohen Stromstärken sind nunmehr derartige Litzenquerschnitte zur elektrischen Stromtragfähigkeit vorzusehen. Dadurch sind die nunmehr frei drehenden Massen vergleichsweise groß und können nicht mehr vernachlässigt werden. Bekannt ist dabei eine Stromdurchführung die drei Kupferprofile aufweist und eine bestehende starre Ableitung im Inneren der Welle vorsieht, die über Stehbolzen und flexible Kupferlamellenbänder die Wicklung des Rotors und des jeweiligen Schleifrings verbindet. Nachteilig dabei sind, die kostenintensive Hochstromdurchführung und ebenso die Wartungsintensität bei Ausfall einer derartigen Durchführung.

Die DE 10 2013 217306 A1 offenbart einen Schleifring, der Litz und ein Stützelement aufweist, das nicht sich axial an der Schleifringkörper anschließt.

Ausgehend davon liegt der Erfindung die Aufgabe zugrunde, einen Schleifringkörper zu schaffen, der auch in Verbindung mit hochstromigen Rotorwicklungen der Fliehkraftbeanspruchung gewachsen ist.

Die Lösung der gestellten Aufgabe gelingt durch einen Schleifringkörper gemäß Anspruch 1.

Erfindungsgemäß wird mit der Fliehkraftabstützung des Stützelementes an der Stirnseite des Schleifringkörpers der Anschluss, insbesondere der Anschlussbolzen gegenüber den Fliehkraftbeanspruchungen einer an diesem Anschluss befestigten Litze und der eigenen Fliehkraftbeanspruchung gestützt. Das Stützelement erfüllt somit zwei Aufgaben, nämlich zunächst den Fliehkraftbeanspruchungen stand zu halten und Litze und Anschlussbolzen abzustützen, als auch gegenüber dem Schleifringkörper eine elektrische Isolation vorzusehen. Vorteilhafterweise umfasst das Stützelement, das als Stützring ausgeführt ist, alle Anschlüsse bzw. Anschlussbolzen passgenau und stützt über eng tolerierte Passmaße die Anschlussbolzen in radialer Richtung ab. Somit nimmt nunmehr das Stützelement die auf die Anschlussbolzen wirkende Zentrifugalkraft auf und entlastet somit die Anschlüsse des Schleifrings. Damit wird erfindungsgemäß vermieden, dass die Anschlussbolzen am Schleifringkörper beschädigt werden bzw. sich aus ihrer vorgesehenen Fixierung lösen. Ein weiterer Vorteil besteht darin, dass nunmehr eine kostenintensive Lösung einer Hochstromdurchführung an den Anschluss durch eine vergleichsweise günstigere mit Litzenleitern ersetzt werden kann, da die Fliehkraftbeanspruchung erfindungsgemäß von dem Stützelement aufgenommen wird.

Es sind somit bei erfindungsgemäßem Gebrauch des Schleifrings bei dynamoelektrischen rotatorischen Maschinen sowohl im Industriesektor als auch bei Windkraftgeneratoren hohe Ströme bei hohen Maschinendrehzahlen realisierbar.

Die Erfindung sowie weitere vorteilhafte Ausgestaltungen der Erfindung werden anhand schematisch dargestellter Ausführungsbeispiele näher erläutert. Darin zeigen:
- FIG 1: einen prinzipiellen Längsschnitt einer dynamoelektrischen Maschine,
- FIG 2: eine perspektivische Darstellung eines Schleifringkörpers,
- FIG 3 bis FIG 5: einen Teillängsschnitt des Schleifringkörpers unterschiedlicher Phasen.

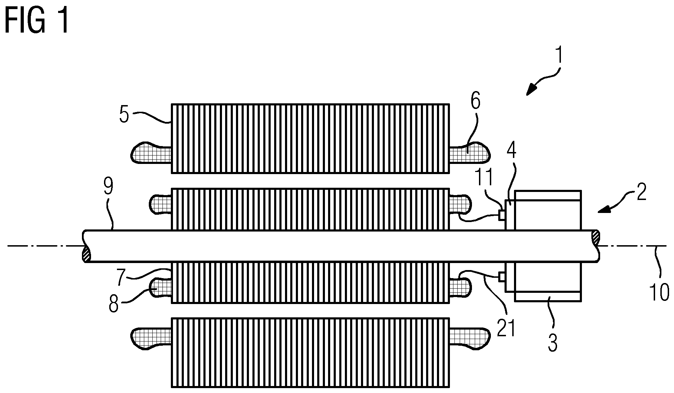

FIG 1 zeigt in prinzipieller Darstellung einen Längsschnitt einer dynamoelektrischen Maschine 1 mit einem Schleifringkörper 2. Der Schleifringkörper 2 und ein Rotor 7 sind damit drehfest auf einer Welle 9 befestigt, koaxial ausgerichtet und drehen sich mit identischer Drehzahl um eine Achse 10.

Über den Schleifringkörper 2 wird ein Wicklungssystem 8 des Rotors 7 über eine nicht näher dargestellte Bürstenvorrichtung 3 bestromt. Desweiteren weist ein Stator 5 ebenfalls ein Wicklungssystem 6 auf. Die Wicklungssysteme 6 und 8 bilden jeweils an den Stirnseiten von Stator 5 und Rotor 7 Wickelköpfe aus. Die Wicklungssysteme 6, 8 sind in nicht näher dargestellten Nuten im Stator 5 und Rotor 7 angeordnet. Eine elektrische Verbindung zwischen dem Wicklungssystem 8 des Rotors 7 und dem Schleifringkörper 2 erfolgt über Litzenleitern 21, die mit dem Anschluss, insbesondere einem Anschlussbolzen 11 elektrisch verbunden sind. Dabei weist ein Anschluss bzw. ein oder mehrere Anschlussbolzen 11 auf, die jeweils eine elektrische Phase des Schleifringkörpers 2 kontaktieren.

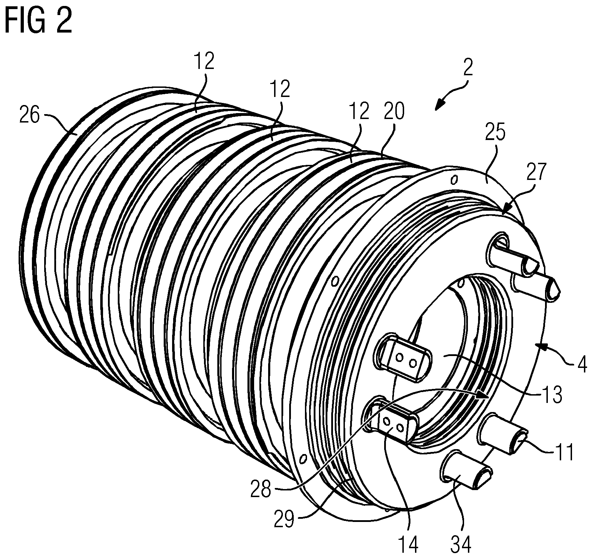

FIG 2 zeigt in perspektivischer Darstellung den Schleifringkörper 2, mit einer Wellenbohrung 13, der auf der dem Betrachter zugewandten Seite ein Stützelement 4 aufweist, aus dem sechs Anschlussbolzen 11 ragen. Die Anschlussbolzen 11 werden auf ihrer aus der Stirnseite des Schleifringkörpers 2 ragenden axialen Länge vom Stützelement 4, das als Stützring ausgeführt ist, umfasst. Die Anschlussbolzen 11 sind von den Kontaktstellen abgesehen von einer Isolation 34 umgeben. Dabei ist an den axialen Enden der Anschlussbolzen 11 im Bereich des Stützelements 4 jeweils eine Kontaktfläche 14 freigelassen, um die Litzenleiter 21 mit dem Anschlussbolzen 11 elektrisch kontaktieren zu können.

Axial an das Stützelement 4 schließt sich der Schleifringkörper 2 an, der eine axiale Abfolge von Isolationselementen und Schleifkontaktflächen 12 axial eingefasst von Endplatten 25, 26 darstellt. Dabei ist für jede elektrische Phase L1, L2, L3 entsprechend den Bezugszeichen 15, 16, 17 eine Schleifkontaktfläche 12 vorgesehen. Pro Phase 15, 16, 17 sind in dieser Ausführung zwei Anschlussbolzen 11 vorgesehen. Die Schleifkontaktflächen 12 weisen, vorzugsweise in Umfangsrichtung betrachtet wellenförmig verlaufende Riefen 20 auf, um eine gleichmäßige Kohlebürstenabnutzung zu gewährleisten.

Vorteilhafterweise umfasst das Stützelement 4, das als einteiliger Stützring ausgeführt ist, alle Anschlüsse 11 bzw. Anschlussbolzen passgenau und stützt über eng tolerierte Passmaße die Anschlussbolzen in radialer Richtung. Somit nimmt nunmehr das Stützelement 4 im Betreib der elektrischen Maschine die auf die Anschlussbolzen wirkende Zentrifugalkraft auf und entlastet somit die Anschlüsse des Schleifringkörpers 2. Damit wird nunmehr vermieden, dass die Anschlussbolzen am Schleifringkörper 2 beschädigt werden bzw. sich aus ihrer vorgesehenen Fixierung lösen.

Ein weiterer Vorteil besteht darin, dass nunmehr eine kostenintensive Lösung einer Hochstromdurchführung an den Anschluss 11 durch eine vergleichsweise günstigere Lösung mit Litzenleitern 21 ersetzt werden kann, da die Fliehkraftbeanspruchung der Anschlüsse 11, insbesondere der Anschlussbolzen erfindungsgemäß von dem Stützelement 4 aufgenommen wird.

Unter dieser aufwändigen Hochstromdurchführung die ersetzt werden soll, wird dabei insbesondere eine aus Kupferprofilen bestehende starre Ableitung im Inneren der Welle verstanden, die durch mehrere Stehbolzen und flexible Kupferlammelenbändern Rotorwicklung und Schleifring miteinander elektrisch verbindet.

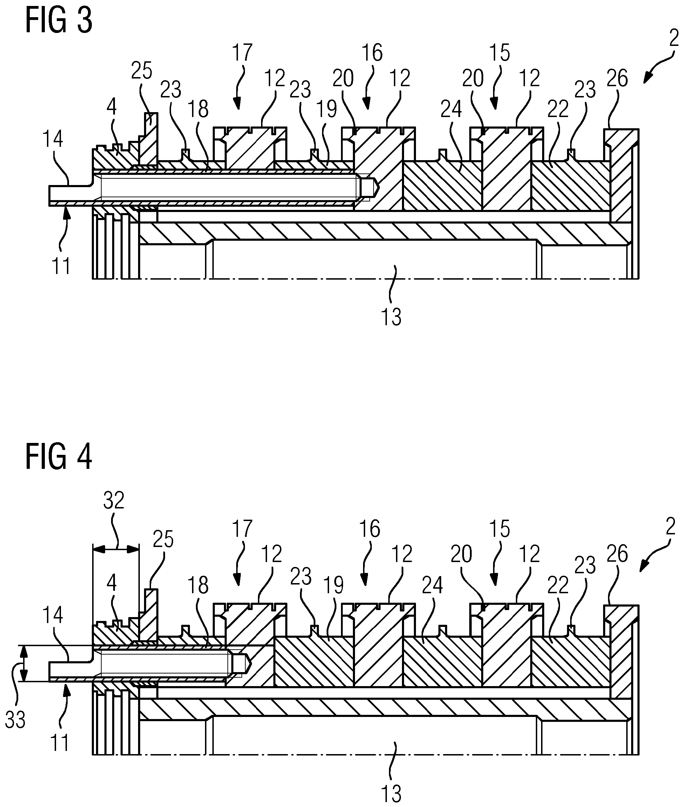

Die Figuren 3 bis 5 weisen in nahezu identischer Ausführung einen Teillängsschnitt eines Schleifringkörpers 2 auf, wobei sich FIG 3, FIG 4 und FIG 5 jeweils nur durch die Kontaktierung des jeweiligen Anschlussbolzens 11 mit seiner jeweiligen Schleifkontaktfläche 12 unterscheiden. Die Anschlussbolzen 11, insbesondere von der Phase L1, Bezugszeichen 15, werden durch die anderen Kontaktflächen der anderen Phasen isoliert bis an die Stirnseite des Schleifringkörpers 2 geführt. Dies ist insbesondere im Vergleich von FIG 3 bis FIG 5 festzustellen.

Zwischen den einzelnen Schleifkontaktflächen 12 der jeweiligen Phasen L1, L2, L3 befinden sich Isolationselemente 19 und 24, die einen elektrischen Überschlag zwischen den Phasen vermeiden sollen.

Insbesondere zwischen den axial äußeren Schleifkontaktflächen 12 der Phasen L1 und L3 und weiteren Bauteilen, wie z.B. geerdeten Endplatten befinden sich ebenfalls Isolationselemente 18 und 22, die einen elektrischen Überschlag zwischen den Phasen und geerdeten Bauteilen vermeiden sollen.

Zur Verlängerung der Kriechpfade zwischen diesen unterschiedlichen elektrischen Potentialen sind dabei Rippen 23 an den Isolationselementen 18, 19, 24 und 22 vorgesehen.

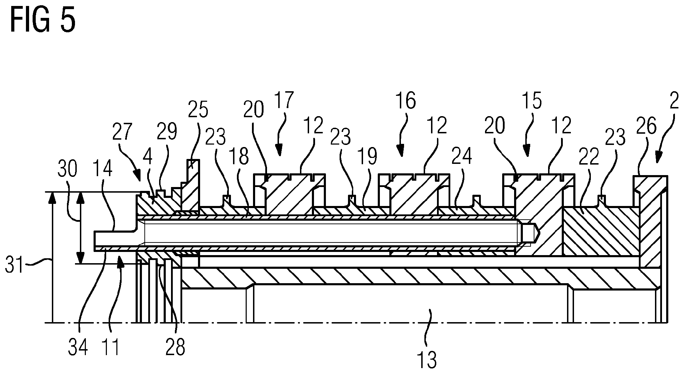

Das Stützelement 4 ist vorteilhafterweise als einstückiger Stützring aus elektrisch isolierendem Material ausgeführt, der an seiner äußeren Umfangsfläche 27 und/oder seiner inneren Umfangsfläche 28 Rippen 29 zur Kriechwegvergrößerung aufweist. Der Durchmesser 31 des gesamten Stützelements entspricht ungefähr dem des Schleifringkörpers 2. Die radiale Ausdehnung 29 entspricht je nach Anforderung an die Fliehkraftkompensation dem 1,5- bis 5-fachen des Durchmessers 33 des Anschlussbolzens 11 des Stützringes, wie dies beispielsweise der FIG 5 zu entnehmen ist. Die axiale Dicke 32 des Stützelements 4 ist u.a. abhängig von den Fliehkraftbeanspruchungen und entspricht dem 0,5- bis 3-fachen des Durchmessers 33 des Anschlussbolzens 11.

Vorteilhafterweise weist das Stützelement 4 eine gleichbleibende axiale Dicke 32 auf. Jedoch ist es auch möglich das einteilige Stützelement 4 insbesondere in den Bereichen um die Anschlussbolzen 11 mit axialen Ausbuchtungen bereits in der Herstellung zu versehen, um eine verbesserte radiale Abstützung zu erhalten. Diese axialen Ausbuchtungen umgeben den Anschlussbolzen 11 dabei mit einem Ring der Dicke, die ungefähr dem Durchmesser des Anschlussbolzens 11 entspricht. Dicke

Des Weiteren sind die äußere und innere Umfangsflächen 27, 28 des Stützelements 4 im Wesentlichen parallel ausgerichtet. Auch die radiale Rippenhöhe der an der äußeren und inneren Umfangsfläche 27, 28 angeordneten Rippen ist gleich.

In einer weiteren Ausprägung des erfinderischen Gedankens sind äußere und/oder innere Umfangsflächen 27, 28 des Stützelements 4 konisch ausgebildet. D.h. die äußere Umfangsfläche 27 ist in ihrem axialen Verlauf ausgehend von der Stirnseite des Schleifringkörpers 2, der Achse 10 zugewandt. Ergänzend oder alternativ dazu verläuft die innere Umfangsfläche 28 in ihrem axialen Verlauf ausgehend von der Stirnseite des Schleifringkörpers 2, weg von der Achse 10.

Es liegt also in Umfangsrichtung betrachtet ein trapezförmiger Querschnitt des Stützelements 4, also des Stützringes vor. Dies wird erreicht indem der Basiskörper des Stützelements 4, insbesondere dessen Basisumfangsflächen auf dem die Rippen 29 angeordnet sind, dementsprechend gestaltet ist und/oder indem die Rippenhöhe dieser umlaufenden Rippen 29 - sofern mehrere Rippen 29 wie beispielsweise in FIG 2 bis FIG 5 gezeigt -variiert. Zum Beispiel weisen dann die Rippen 29, die sich auf dem Stützelement 4 an der Stirnseite des Schleifringkörpers 2 befinden eine größere Rippenhöhe auf, als die Rippen, die von der Stirnseite weiter entfernt angeordnet sind.

Mit anderen Worten die Rippenhöhe der einzelnen in Umfangrichtung verlaufenden Rippen nimmt im weiteren axialen Verlauf ab.

Der einfache und wirkungsvolle Aufbau der Schleifringkörpers 2 erlaubt einen sicheren und wartungsarmen Betrieb einer derartigen rotatorischen elektrischen Maschine, insbesondere wenn sie als Generator bei Windkraftanalgen On- oder Offshore eingesetzt wird.

## Patentansprüche

1. Rotatorische dynamoelektrische Maschine (1) mit einem elektrisch erregten Läufer (7) in dessen axialer Verlängerung, ein um die gleiche Achse (10) wie der Läufer (7) rotierender Schleifringkörper (2) vorgesehen ist, wobei der Schleifringkörper (2) für den um die Achse (10) rotierbaren elektrisch erregten Läufer der rotatorischen dynamoelektrischen Maschine (1), mit zumindest einer umlaufenden Schleifkontaktfläche (12), die elektrisch leitend mit zumindest einem axial aus einer Stirnseite des Schleifringkörpers (2) ragenden elektrischen Anschluss (11) verbunden ist,
wobei eine elektrische Verbindung zwischen einem Wicklungssystem (8) des Läufers (7) und dem Schleifringkörper (2) über Litzenleiter (21), die mit dem Anschluss elektrisch verbunden sind, erfolgt,
wobei eine Stirnseite des Schleifringkörpers (2) mit einem im Wesentlichen dem Querschnitt des Schleifringkörpers (2) entsprechend elektrisch isolierten Stützelement (4) versehen ist, das den Anschluss (11) axial umgibt und radial stützt, wobei. sich axial an das Stützelement (4) der Schleifringkörper (2) anschließt, der eine axiale Abfolge von Isolationselementen und Schleifkontaktflächen (12) axial eingefasst von Endplatten (25,26) darstellt,
wobei das Stützelement (4) als einstückiger Stützring ausgeführt ist.

2. Rotatorische dynamoelektrische Maschine (1) nach Anspruch 1, **dadurch gekennzeichnet, dass** das Stützelement (4) Mittel zur Kriechwegvergrößerung, insbesondere an seiner radial äußeren Umfangsfläche (27) aufweist.

3. Rotatorische dynamoelektrische Maschine (1) nach Anspruch 2, **dadurch gekennzeichnet, dass** das Stützelement (4) zur Kriechwegvergrößerung umlaufende Rippen (29) aufweist.

4. Windkraftgenerator, der eine rotatorische dynamoelektrische Maschine (1) nach einem der vorhergehenden Ansprüche aufweist.

5. Windkraftanlage mit zumindest einem Windkraftgenerator nach Anspruch 4.

## Claims

1. Rotary dynamo-electric machine (1) with an electrically excited rotor (7) whose axial extension comprises a slip ring unit (2) rotating about the same axis (10) as the rotor (7), wherein the slip ring unit (2) for the electrically excited rotor of the rotary dynamo-electric machine (1), said slip ring unit (2) being rotatable about the axis (10) and having at least one circumferential slip contact surface (12) which is connected in an electrically conductive manner to at least one electrical terminal (11) protruding axially from an end face of the slip ring unit (2), wherein an electrical connection between a winding system (8) of the rotor (7) and the slip ring unit (2) takes place via wire conductors (21), which are electrically connected to the terminal, wherein an end face of the slip ring unit (2) is equipped with an electrically insulated support element (4) which substantially matches the cross section of the slip ring unit (2) while axially surrounding and radially supporting the terminal (11), wherein the slip ring unit (2), comprising an axial series of insulation elements and slip contact surfaces (12) that are axially retained by end plates (25,26), axially adjoins the support element (4), wherein the support element (4) is designed as an integral support ring.

2. Rotary dynamo-electric machine (1) according to claim 1, **characterised in that** the support element (4) has means for lengthening the leakage path at its radially outer circumferential surface (27) in particular.

3. Rotary dynamo-electric machine (1) according to claim 2, **characterised in that** the support element (4) has circumferential ribs (29) for lengthening the leakage path.

4. Wind power generator which has a rotary dynamo-electric machine (1) according to one of the preceding claims.

5. A wind power installation which has at least one wind power generator according to claim 4.

## Revendications

1. Machine (1) dynamoélectrique tournante, comprenant un rotor (7) à excitation électrique dans son prolongement axial, un corps (2) de bague de collecteur tournant autour du même axe (10) que le rotor (7) étant prévu,
dans laquelle le corps (2) de la bague de collecteur, pour le rotor à excitation électrique tournant autour de l'axe (10) de la machine (1) dynamoélectrique tournante, ayant au moins une surface (12) de contact de collecteur, qui fait le tour et qui est reliée d'une manière conductrice de l'électricité à au moins une borne (11) électrique en saillie d'un côté frontal du corps (2) de la bague de collecteur, dans lequel une liaison électrique, entre le système d'enroulement du rotor (7) et le corps (2) de la bague de collecteur, s'effectue par des conducteurs (21) torsadés, qui sont reliés électriquement à la borne,
dans laquelle un côté frontal du corps (2) de la bague de collecteur est pourvu d'un élément (4) d'appui isolant électriquement, correspondant sensiblement à la section transversale du corps (2) de la bague de collecteur, élément qui entoure axialement et appuie radialement la borne (11), le corps (2) de la bague de collecteur se raccordant axialement à l'élément (4) d'appui, le corps représentant une suite axiale d'éléments isolants et de surfaces (12) de contact de collecteur, enchâssés axialement par des plaques (25, 26) d'extrémité,
dans laquelle l'élément (4) d'appui est constitué sous la forme d'un anneau d'appui d'une seule pièce.

2. Machine (1) dynamoélectrique tournante suivant la revendication 1, **caractérisée en ce que** l'élément (4) d'appui a, notamment sur sa surface (27) périphérique extérieure radialement, des moyens d'augmentation de ligne de fuite.

3. Machine (1) dynamoélectrique tournante suivant la revendication 2, **caractérisée en ce que** l'élément (4) d'appui a des nervures (29) faisant le tour d'augmentation de ligne de fuite.

4. Génératrice d'éolienne, qui a une machine (1) dynamo électrique tournante suivant l'une des revendications précédentes.

5. Eolienne ayant au moins une génératrice d'éolienne suivant la revendication 4.
